Europäisches Patentamt

European Patent Office

Office européen des brevets

(19)

(11) Veröffentlichungsnummer: **0 038 521**
**B1**

(12) **EUROPÄISCHE PATENTSCHRIFT**

(45) Veröffentlichungstag der Patentschrift:
24.10.84

(21) Anmeldenummer: 81102868.7

(22) Anmeldetag: 15.04.81

(51) Int. Cl.³: **B 01 F 15/06,** B 29 B 1/06,
B 29 B 3/00

(54) Mischbehälter.

(30) Priorität: 22.04.80 DE 3015404

(43) Veröffentlichungstag der Anmeldung:
28.10.81 Patentblatt 81/43

(45) Bekanntmachung des Hinweises auf die Patenterteilung:
24.10.84 Patentblatt 84/43

(84) Benannte Vertragsstaaten:
DE FR GB IT

(56) Entgegenhaltungen:
CH - A - 443 194
FR - A - 1 206 810
FR - A - 1 230 445
FR - A - 1 291 702
FR - A - 2 361 146
GB - A - 1 473 492
US - A - 2 778 922
US - A - 2 872 165

(73) Patentinhaber: Herfeld, Friedrich Walter, Dr., Wall 1,
D-5982 Neuenrade (DE)

(72) Erfinder: Herfeld, Friedrich Walter, Dr., Wall 1,
D-5982 Neuenrade (DE)

(74) Vertreter: Hassler, Werner, Dr.,
Postfach 17 04 Asenberg 62, D-5880 Lüdenscheid (DE)

## Beschreibung

Die Erfindung betrifft einen Mischbehälter mit einer vertikal ausgerichteten zylindrischen Umfangswandung und einem auf einer vertikalen Welle sitzenden Mischwerkzeug.

Innerhalb eines derartigen Mischbehälters erfolgt vielfach auch eine Erwärmung oder Abkühlung des Mischgutes. Dabei ist die Umfangswandung als Hohlwandung zur Aufnahme eines Wärmeaustauschmittels ausgebildet. Der Wärmeaustausch mit dem Mischgut hängt selbstverständlich unter anderem von der Fläche der Umfangswandung ab, die als Austauschfläche wirksam ist.

Bei einem Kühlmischer für Thermoplastzubereitungen muss dem Mischgut vergleichsweise viel Wärme über die Umfangswandung entzogen werden. Während der Kühlung wird das Mischgut durch das Mischwerkzeug umgewälzt. Dieses bedeutet, dass durch das Mischwerkzeug zusätzliche Energie und damit Wärme in das Mischgut eingeleitet wird, so dass umso mehr Wärme über die Umfangswandung abgeführt werden muss, je länger die Kühlbehandlung dauert. Man muss also bestrebt sein, die Kühldauer möglichst kurz zu halten, um auch die Wärmeeinleitung über das Mischwerkzeug herabzusetzen.

Aufgabe der Erfindung ist eine solche Ausbildung des Mischbehälters, dass der Wärmeaustausch möglichst gross ist, um dadurch die Abkühlung des Mischgutes zu beschleunigen.

Diese Aufgabe wird nach der Erfindung dadurch gelöst, dass auf der Innenseite der Umfangswandung Umfangsrillen mit sägezahnförmigem Querschnitt vorgesehen sind, deren Flanken einen spitzen Winkel einschliessen, wobei jeweils eine Flanke nach oben divergent und geneigt zur Bodenwandung und die andere Flanke im wesentlichen horizontal verläuft.

Ferner kann eine entsprechende Ausführungsart auch als Heizmischer Verwendung finden, wenn statt des Kühlmediums ein Heizmedium durch die Hohlwandung des Behältermantels geführt wird, so dass aufgrund der grösseren Wärmeaustauschfläche eine wirkungsvollere und rasche Erwärmung des Mischgutes von Seiten der Behälterwand erfolgt.

Nach einer bevorzugten Ausführungsform der Erfindung ist vorgesehen, dass die zur Bodenwandung geneigten Flanken unter einem Winkel von etwa 45° gegenüber der Horizontalen geneigt sind.

Durch diese Ausbildung der Umfangswandung ergibt sich eine wesentliche Vergrösserung der Oberfläche der Umfangswandung gegenüber einer zylindrischen Wandung. Wenn z.B. die zur Bodenwandung geneigte und nach oben divergent verlaufenden Flanken unter einem Winkel von 45° ausgerichtet sind, so wird die Fläche der Umfangswandung gegenüber einer entsprechenden zylindrischen Wandung um einen Faktor 2,4 vergrössert. Dieses bedeutet auch eine entsprechende Vergrösserung der Wärmeaustauschwirkung. Die in der angegebenen Weise angeordneten Rillenflanken behindern den Umlauf des Mischgutes nicht, weil das Mischgut an den konischen Rillenflanken abgleitet. Das nach oben geschleuderte Mischgut kann ungehindert nach unten fallen.

Infolge der beträchtlichen Erhöhung der Wärmeaustauschwirkung am Mantel des Mischbehälters kann die Mischzeit, insbesondere die Kühlzeit verkürzt werden. Damit wird die Mischenergie herabgesetzt, so dass damit auch die zusätzlich eingeleitete Energie, die lediglich eine nutzlose Aufheizung des Mischgutes bedingt, geringer wird. Insgesamt wirkt sich dieses auf den Energieverbrauch des Kühlvorgangs ausserordentlich günstig aus. Die notwendige Energiemenge wird verringert. Durch die Vergrösserung der spezifischen Mantelfläche der Umfangswandung kann man in einem Mischbehälter mit einem vorgegebenen Innenvolumen eine grössere Menge Mischgut bei gleicher Kühlwirkung behandeln. Damit können die vorhandenen Mischgeräte wirtschaftlicher genutzt werden.

Nach einer weiteren Ausführungsform der Erfindung können zwei oder mehrere profilierte Ringwandungen konzentrisch ineinander angeordnet sein. Dadurch erreicht man eine weitere Verbesserung der Kühlwirkung.

Der Unterrand einer Ringwandung kann als Durchtrittsspalt für das Mischgut dienen.

Eine Ausführungsform der Erfindung wird im folgenden unter Bezugnahme auf die anliegende Zeichnung erläutert, in der darstellen:

Fig. 1 eine teilweise schematische Schnittdarstellung des Mischbehälters,
Fig. 2 eine Draufsicht zu Fig. 1,
Fig. 3 einen Ausschnitt III der Umfangswandung in vergrössertem Massstab und
Fig. 4 eine abgewandelte Ausführungsform.

Der in den Figuren dargestellte Mischbehälter hat eine horizontal ausgerichtete Bodenwandung 1 und einen vertikal ausgerichteten Mantel 2. Sowohl die Bodenwandung 1 als auch der Mantel 2 sind doppelwandig ausgebildet und besitzen Einrichtungen zur Durchleitung eines Wärmeaustauschmittels. Der Mantel 2 besitzt eine innere zylindrische Umfangswandung 3. Durch die Bodenwandung 1 ist zentral eine Antriebswelle 4 für ein schematisch dargestelltes Mischwerkzeug 5 eingeführt.

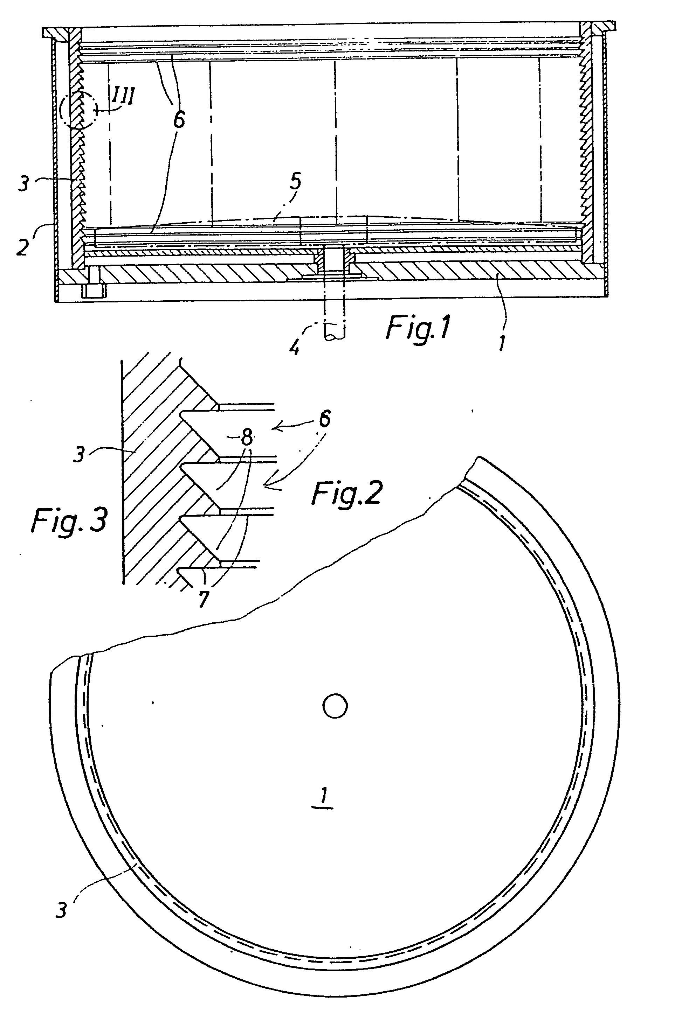

In die Umfangswandung 3 sind Umfangsrillen 6 mit sägzahnförmigem Querschnitt eingearbeitet. In Fig. 3 ist das Rillenprofil in Einzelheiten dargestellt. Die Flanken 7 und 8 bilden einen spitzen Winkel miteinander. Die Flanke 7 verläuft im wesentlichen horizontal. Die andere Flanke 8 verläuft geneigt zur Bodenwandung 1 und nach oben divergent, so dass sie die Form einer sich erweiternden Kegelstumpffläche hat. Der Neigungswinkel beträgt etwa 45° oder mehr. Bei einem Neigungswinkel von 45° ergibt sich eine Vergrösserung der Umfangsfläche im Verhältnis zu einer Zylinderfläche um einen Faktor 2,4.

Diese Umfangsrillen 6 bringen eine erhebliche Vergrösserung der Austauschfläche. Dadurch ist es möglich, eine bestimmte Wärmemenge aus dem Mischgut innerhalb kürzerer Zeit abzuführen. Dieses bedeutet eine Verkleinerung der Kühldauer und damit auch der Umwälzdauer durch das Mischwerkzeug 5. Infolgedessen wird von dem Mischwerkzeug 5 weniger Wärmeenergie in das Mischgut eingeleitet, so dass dadurch die abzuführende Wärmeenergie nochmals verkleinert wird. Die Energiebilanz des Kühlvorgangs lässt sich deutlich verbessern.

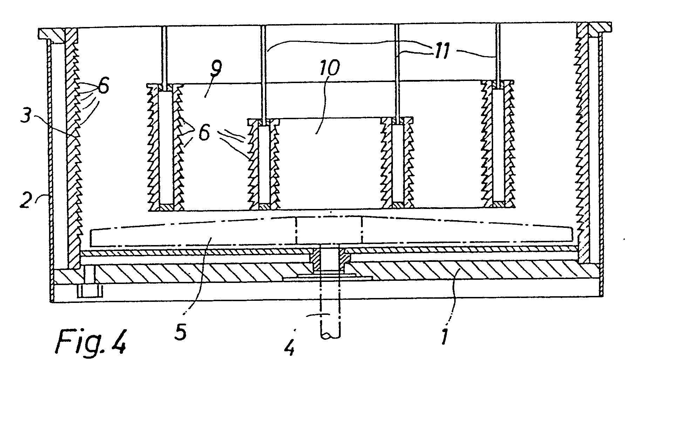

Bei der Ausführungsform nach Fig. 4 sind im Innenraum des Mischbehälters konzentrisch zur Behälterachse und zur Umfangswandung 3 Ringanwandungen 9 und 10 angeordnet, die innen und aussen Rillenprofile 6 aufweisen. Die Ringwandungen 9 und 10 sind als Hohlwandungen ausgebildet und an Tragelementen 11 aufgehängt und gehalten. Die Tragelemente 11 können gleichzeitig als Leitungen für das Kühlmittel dienen.

Die Erfindung ermöglicht es auch, in einem Mischbehälter mit einem bestimmten Innenvolumen eine grössere Mischgutmenge bei sonst gleichen Bedingungen zu kühlen.

## Patentansprüche

1. Mischbehälter mit einer vertikal ausgerichteten, im wesentlichen zylindrischen Umfangswandung (3) und einem auf einer vertikalen Welle (4) sitzenden Mischwerkzeug (5), dadurch gekennzeichnet, dass auf der Innenseite der Umfangswandung (3) Umfangsrillen (6) mit sägezahnförmigem Querschnitt vorgesehen sind, deren Flanken (7 und 8) einen spitzen Winkel einschliessen, wobei jeweils eine Flanke (8) nach oben divergent und geneigt zur Bodenwandung und die andere Flanke (7) im wesentlichen horizontal verläuft.

2. Mischbehälter nach Anspruch 1, dadurch gekennzeichnet, dass die zur Bodenwandung geneigten Flanken (8) unter einem Winkel von etwa 45° gegenüber der Horizontalen geneigt sind.

3. Mischbehälter nach Anspruch 1 oder 2, dadurch gekennzeichnet, dass zwei oder mehrere Ringwandungen (9, 10) konzentrisch ineinander und zur Umfangswandung (3), angeordnet sind, und dass die Ringwandungen (9, 10) ebenfalls solche Umfangsrillen (6) wie die Umfangswandung (3) aufweisen.

4. Mischbehälter nach Anspruch 3, dadurch gekennzeichnet, dass die Ringwandungen (9, 10) innen und aussen profiliert sind.

## Revendications

1. Récipient mélangeur comprenant une paroi périphérique sensiblement cylindrique (3), disposée verticalement, et un outil mélangeur (5) agencé sur un arbre vertical (4), caractérisé en ce que, du côté interne de la paroi périphérique (3), sont prévues des rainures périphériques (6) à section transversale en dent de scie, dont les flancs (7 et 8) forment un angle aigu, un des flancs (8) étant incliné par rapport à la paroi de fond en divergeant vers le haut, tandis que l'autre flanc (7) est disposé sensiblement horizontalement.

2. Récipient mélangeur suivant la revendication 1, caractérisé en ce que les flancs (8) inclinés par rapport à la paroi de fond sont inclinés sous un angle d'environ 45° par rapport à l'horizontale.

3. Récipient mélangeur suivant l'une des revendications 1 et 2, caractérisé en ce que deux ou plusieurs parois annulaires (9, 10) sont agencées concentriquement l'une à l'autre et à la paroi périphérique (3), et en ce que les parois annulaires (9, 10) présentent également des rainures périphériques (6) comme la paroi périphérique (3).

4. Récipient mélangeur suivant la revendication 3, caractérisé en ce que les parois annulaires (9, 10) sont profilées à l'intérieur et à l'extérieur.

## Claims

1. A mixing container with a vertically aligned, substantially cylindrical circumferential wall (3) and a mixing tool (5) seated on a vertical shaft (4), characterized in that an inner side of the circumferential wall (3) is provided with circumferential grooves (6) which have a saw-tooth shaped cross-section, flanks (7 and 8) of said grooves enclose an acute angle, a first flank (8) extends upwards divergently and sloping with respect to the bottom wall and a second flank (7) extends substantially horizontally.

2. A mixing container according to claim 1, characterized in that the flank (8) sloping with respect to the bottom wall are sloped with respect to the horizontal line at an angle of approximately 45°.

3. A mixing container according to claim 1 or claim 2, characterized in that two or more annular walls (9, 10) are arranged concentrically in one another and to the circumferential wall and that the annular walls (9, 10) are also provided with such circumferential grooves (6) just as the circumferential wall (3).

4. A mixing container according to claim 3, characterized in that the annular walls (9, 10) are profiled on the inside and outside.

*Fig.1*

*Fig.3*

*Fig.2*

Fig. 4